# EUROPÄISCHE PATENTANMELDUNG

(11) **EP 4 488 086 A1**
(43) Veröffentlichungstag der Anmeldung: **08.01.2025**
(21) Anmeldenummer: 24178216.8
(22) Anmeldetag: 27.05.2024
(51) Int. Cl.: B60J 5/06, B62D 33/02

(54) **NUTZFAHRZEUGAUFBAU**

(30) Priorität: 28.06.2023 DE 102023117008
(71) Anmelder: Kögel Trailer GmbH, 89349 Burtenbach (DE)
(72) Erfinder: BROLL, Tobias, 86381 Krumbach-Billenhausen (DE)
(74) Vertreter: Meissner Bolte Partnerschaft mbB

(57) **Zusammenfassung**

Die Erfindung betrifft einen Nutzfahrzeugaufbau (10) mit wenigstens einer Runge (11) und wenigstens einem Dachholm (12) eines, insbesondere höhenverstellbaren, Dachs, wobei die Runge (11) an dem Dachholm (12) verschiebbar geführt ist und von einer Verriegelungsstellung in eine entriegelte Stellung und umgekehrt überführbar ist, wobei am Dachholm (12) und an einem Rungenkopf (13) der Runge (11) Arretiermittel (14) vorgesehen sind, die in einer Verriegelungsstellung der Runge (11) ineinandergreifen, um ein Verschieben der Runge (11) entlang des Dachholms (12) zu unterbinden, wobei die Arretiermittel (14), insbesondere jeweils wenigstens zwei, rund ausgebildete Haltekonturen (15) aufweisen, wobei die Haltekonturen (15) der Arretiermittel (14) in der Verriegelungsstellung einen Formschluss zumindest in Längsrichtung des Dachholms (12) bilden.

## Beschreibung

Die Erfindung betrifft einen Nutzfahrzeugaufbau. Ein Nutzfahrzeugaufbau nach dem Oberbegriff des Patentanspruchs 1 ist beispielsweise aus der EP 3 705 330 A1 bekannt.

Die Sicherung einer Ladung in einem Nutzfahrzeugaufbau ist ein wichtiger Gesichtspunkt des Gütertransports. Die Ladungssicherung kann über einen Formschluss oder einen Kraftschluss erfolgen. Besonders wirksam ist eine Ladungssicherung, die einen Formschluss bietet. Bei Nutzfahrzeugaufbauten ist dies üblicherweise dann erreicht, wenn der Nutzfahrzeugaufbau voll beladen ist, so dass die Ladung an einer Vorderwand, an den Seitenwänden und einer Rückwand im Wesentlichen bündig anliegt. Die Wände des Nutzfahrzeugaufbaus bilden so das entsprechende formschlüssige Ladungssicherungssystem.

Bei Nutzfahrzeugaufbauten, die als Schiebeplanen- oder Seitenplanenaufbauten gestaltet sind, besteht die Besonderheit, dass diese üblicherweise entlang des Dachholms verschiebbare Mittelrungen aufweisen. Diese Mittelrungen sind meist nur mit ihrem Fuß im Bereich der Ladefläche verriegelt und in einer Schiene des Dachholms frei verschiebbar. Die Mittelrungen dienen neben dem Abstützen des Dachholms zusätzlich zur Aufnahme von Ladungssicherungskräften und können bspw. über Sperrbalken eine formschlüssige Ladungssicherung bewerkstelligen. Hierbei ist es aber wesentlich, dass die verschiebbaren Mittelrungen am Dachholm verriegelbar sind, da sonst eine auf den Sperrbalken wirkende Kraft zu einem Verschieben des oberen Teils der Mittelrunge und damit zu einem Verkanten oder gar einem Verlieren der Mittelrunge führen kann.

Aus der eingangs genannten EP 3 705 330 A1 ist beispielsweise ein Nutzfahrzeugaufbau in Form eines Planenaufbaus bekannt, der eine Möglichkeit zur Mittelrungenarretierung an einem Dachholm aufzeigt. Der Dachholm weist dazu ein dreieckförmiges Arretierelement und die Mittelrunge an deren Rungenkopf ein Gegenstück mit einer zum dreieckförmigen Arretierelement komplementären Ausnehmung auf. In einer Verriegelungsstellung der Mittelrunge greift das Arretierelement des Dachholms in die Ausnehmung des Gegenstücks des Rungenkopfes ein. Das Arretierelement und die Ausnehmung des Gegenstücks umfassen durch die Dreiecksform Führungsflächen, die in Holmlängsrichtung geradlinig ansteigend bzw. geradlinig abfallend sind.

Die in der EP 3 705 330 A1 beschriebene Mittelrungenarretierung hat den Nachteil, dass die Mittelrunge bei der Einleitung von hohen Kräften in Holmlängsrichtung, bspw. durch ein starkes Bremsmanöver oder der Sicherung von Schwerstladung, dazu neigt, durch die geradlinig schrägverlaufenden Führungsflächen den Dachholm anzuheben und somit die Arretierung zu lösen. Für eine Ladungssicherung in Sondersituationen, wie vorstehend genannt, ist daher die Mittelrungenarretierung mit geradlinig schrägverlaufenden Führungsflächen nicht geeignet.

Der Erfindung liegt daher die Aufgabe zu Grunde, einen Nutzfahrzeugaufbau anzugeben, der eine besonders sichere Arretierung einer Mittelrunge an einem Dachholm und somit eine verbesserte Ladungssicherung ermöglicht.

Diese Aufgabe wird im Hinblick auf den Nutzfahrzeugaufbau durch den Gegenstand des Patentanspruchs 1 gelöst.

Konkret wird die Aufgabe durch einen Nutzfahrzeugaufbau mit wenigstens einer Runge und wenigstens einem Dachholm eines, insbesondere höhenverstellbaren, Dachs gelöst. Die Runge ist an dem Dachholm verschiebbar geführt und von einer Verriegelungsstellung in eine entriegelte Stellung und umgekehrt überführbar. Am Dachholm und an einem Rungenkopf der Runge sind Arretiermittel vorgesehen, die in einer Verriegelungsstellung der Runge ineinandergreifen, um ein Verschieben der Runge entlang des Dachholms zu unterbinden. Die Arretiermittel weisen, insbesondere jeweils wenigstens zwei, rund ausgebildete Haltekonturen auf, wobei die Haltekonturen der Arretiermittel in der Verriegelungsstellung einen Formschluss zumindest in Längsrichtung des Dachholms bilden.

Ein wesentlicher Gedanke der Erfindung besteht darin, dass die Arretiermittel, durch welche die Runge an dem Dachholm festlegbar ist, anstatt von aus dem Stand der Technik bekannten geradlinigen Führungsflächen, rund ausgebildete Haltekonturen umfasst. Diese ermöglichen ein schonendes Eingreifen der Arretiermittel beim Überführen der Runge von der entriegelten Stellung in die Verriegelungsstellung. Dadurch, dass die rund ausgebildeten Haltekonturen den Formschluss zur Verriegelung der Runge bilden, erfolgt beim Verriegeln ein stumpfer Anschlag aufgrund der in Kontakt tretenden Rundungen der Haltekonturen. Dies schont die Arretiermittel und erhöht somit deren Lebensdauer.

Andererseits erfüllen die Arretiermittel über deren rund ausgebildeten Haltekonturen eine sichere Haltefunktion, um die Runge an dem Dachholm auf Position zu halten. Durch die runde Ausgestaltung der Haltekonturen ist in der Verriegelungsstellung ein Formschluss realisiert, der im Besonderen in Längsrichtung des Dachholms ein sicheres Halten der Runge an dem Dachholm gewährleistet. Die Haltekonturen umfassen aufgrund des runden Verlaufs jeweils einen rund ansteigenden Konturabschnitt. Dies hat den Vorteil, dass die Runge mit ihrem Arretiermittel gegen den rund ansteigenden Konturabschnitt des Arretiermittels des Dachholms angepresst und somit ein Verschieben der Runge in Längsrichtung des Dachholms blockiert ist. Dies ist insbesondere von Vorteil, wenn ein starker Bremsvorgang im Fahrbetrieb erfolgt oder die Ladungssicherung von Schwerstladung erforderlich ist.

Im Unterschied hierzu unterstützen die in EP 3 705 330 A1 beschrieben geradlinigen Führungsflächen ein Anheben bzw. Heraushebeln des Dachholms, da die von der Runge in den Dachholm über die Führungsflächen in Holmlängsrichtung eingeleitete Kraft lediglich nur reduziert vom Dachholm aufgenommen werden kann. Nur eine zusätzliche Sicherung des Dachholms an der Runge oder der Runge an dem Dachholm, bspw. durch Planenspanner, kann ein unzulässiges Lösen der Rungenarretierung verhindern.

Die erfindungsgemäß rund ausgebildeten Haltekonturen der Arretiermittel stellen somit eine verbesserte Krafteinleitung in den Dachholm sicher. Zusätzliche Sicherungsmittel, die ein unzulässiges Anheben des Dachholms verhindern, können bei die dem erfindungsgemäßen Nutzfahrzeugaufbau entfallen. Insbesondere reicht bei dem erfindungsgemäßen Nutzfahrzeugaufbau das Eigengewicht des Dachholms aus, um einen vertikalen Eingriff der Arretiermittel des Dachholms und der Runge aufrecht zu erhalten. Daraus ergibt sich der weitere Vorteil, dass der Nutzfahrzeugaufbau, bspw. in der Konfiguration als Planenaufbau, im Fahrbetrieb seitlich offen bleiben kann, sollte kein Wetterschutz erforderlich sein.

Die Arretiermittel realisieren in der Verriegelungsstellung der Runge durch die rund ausgebildeten Haltekonturen ein Halten der Runge an dem Dachholm. Mit anderen Worten ist die Runge in der Verriegelungsstellung an dem Dachholm unverschiebbar festgelegt. Dazu greifen die Arretiermittel des Dachholms und des Rungenkopfes derart ineinander, dass durch die rund ausgebildeten Haltekonturen ein Formschluss in Längsrichtung des Dachholms gebildet ist. Bevorzugt ist der Formschluss quer zur Längsrichtung des Dachholms lösbar. Ein Lösen des Formschlusses kann bspw. durch, insbesondere geringfügiges, Anheben des Dachholms und/oder durch Längenänderung der Runge erfolgt. Im Falle der Längenänderung der Runge kann der Rungenkopf nach unten verschoben werden. Dies ist bspw. möglich, wenn die Runge teleskopierbar ist.

In der Verriegelungsstellung stehen die Arretiermittel durch die Haltekonturen in Kontakt. In der entriegelten Stellung der Runge sind die Arretiermittel außer Eingriff. Mit anderen Worten sind die Arretiermittel in der entriegelten Stellung voneinander beabstandet, sodass der Formschluss aufgehoben ist. Das Überführen der Runge von der entriegelten Stellung in die Verriegelungsstellung und umgekehrt erfolgt vorzugsweise durch eine vertikale Bewegung des Rungenkopfs und/oder des Dachholms.

Die rund ausgebildeten Haltekonturen der Arretiermittel sind vorzugsweise vollständig rund, d.h. kreisbogenförmig. Die rund ausgebildeten Haltekonturen sind vorzugsweise frei von geradlinigen Konturabschnitten. Konkreter können die Haltekonturen oder wenigstens eine der Haltekonturen frei von einem in Längsrichtung des Dachholms geneigten Konturabschnitt, insbesondere einer geneigten Führungskontur (-fläche), sein. Mit anderen Worten weisen Haltekonturen bevorzugt ausschließlich eine Kreisbogenform auf.

Besonders bevorzugt weisen die Arretiermittel wenigstens zwei rund ausgebildete Haltekonturen auf, die in der Verriegelungsstellung einen beidseitigen Formschluss in Längsrichtung des Dachholms bilden. Dadurch erfolgt neben dem positionssicheren Halten der Runge an dem Dachholm ein Zentrieren der Runge. Mit anderen Worten ermöglicht die runde Form der Haltekonturen ein Führen der Arretiermittel zum Erreichen der Endposition der Runge. Es ist möglich, dass wenigstens eine der Haltekonturen derart rund ausgebildet ist, dass in der Verriegelungsstellung der Runge ein teilweiser Formschluss in vertikaler Richtung, insbesondere quer zur Längsrichtung des Dachholms, gebildet ist.

Vorzugsweise kommt der Nutzfahrzeugaufbau als Planenaufbau zum Einsatz, dessen Längsseiten mit einer verschiebbaren Seitenplane versehen sind. Bekannter Weise spricht man hier von einem Curtainsider. Zusätzlich kann der Nutzfahrzeugaufbau ein Schiebeverdeck aufweisen, sodass ein Be- und Entladen des Laderaums von oben möglich ist. Andere Anwendungen sind möglich.

Bei einer bevorzugten Ausführungsform liegen die Haltekonturen der Arretiermittel am Dachholm und am Rungenkopf zur Bildung des Formschlusses aneinander an. Die Arretiermittel können durch die Haltekonturen punkt- oder linienförmig in Kontakt stehen. Bevorzugt liegen die Haltekonturen der Arretiermittel am Dachholm und am Rungenkopf zur Bildung des Formschlusses in der Verriegelungsstellung vollständig aneinander an. Bevorzugt stehen die Haltekonturen der Arretiermittel flächig in Kontakt. Dadurch ist ein stabiler und fester Formschluss realisiert.

Bei einer weiteren bevorzugten Ausführungsform weisen die Haltekonturen der Arretiermittel am Dachholm und/oder am Rungenkopf jeweils einen Radius von 0,5 cm bis 10 cm, insbesondere 0,5 cm bis 6 cm, vorzugsweise 1 cm bis 4 cm, auf. Bevorzugt weisen die Haltekonturen jeweils einen Radius zwischen 1 cm bis 2 cm, besonders bevorzugt von 1,5 cm (15 mm), auf. Es ist möglich, dass die rund ausgebildete Haltekontur nur einen einzigen Radius umfasst. Alternativ kann die Haltekontur wenigstens zwei, insbesondere mehr als zwei, runde Konturabschnitte umfassen, deren Radien sich unterscheiden. Hier sind eine Vielzahl von gerundeten Haltekonturen möglich, sodass die Variantenvielfalt der Arretiermittel erhöht ist.

Bevorzugt weisen die Haltekonturen der Arretiermittel am Dachholm und/oder am Rungenkopf jeweils wenigstens einen rund ansteigenden Konturabschnitt auf. Bevorzugt ist der rund ansteigend Konturabschnitt, der im Wesentlichen quer zur Längsrichtung des Dachholms, insbesondere nach oben, ausläuft. Besonders bevorzugt verläuft der rund ansteigende Konturabschnitt der Haltekonturen derart, dass dieser eine Seitenwand des Arretiermittels bildet. Die Seitenwand ist vorzugsweise zumindest abschnittsweise senkrecht zum Dachholm ausgerichtet. Dies hat den Vorteil, dass über die Arretiermittel eine Krafteinleitung bspw. von dem Rungenkopf in den Dachholm ermöglicht ist, bei der die Kraft parallel zur Längsrichtung des Dachholms normal auf die Seitenwand der Arretiermittel wirkt. Dadurch wird ein Verschieben der Runge in Längsrichtung des Dachholms besonders effektiv unterbunden.

Es ist möglich, dass der rund ansteigende Konturabschnitt in einen senkrechten Abschnitt der Arretiermittel übergeht. Der senkrechte Abschnitt verläuft bevorzugt quer zur Längsrichtung des Dachholms. Dadurch ist die Haltefunktion der Arretiermittel in Längsrichtung des Dachholms weiter verbessert.

Bei einer weiteren bevorzugten Ausführungsform sind die Haltekonturen der Arretiermittel am Dachholm und/oder am Rungenkopf jeweils als Kreisbogen mit einem Erstreckungswinkel α von 45°, insbesondere 60°, vorzugsweise 90°, ausgebildet. Der Erstreckungswinkel α kann alternativ ein beliebiger Winkel zwischen 45° und 90° sein. Vorzugsweise weisen die Haltekonturen ausgehend von einer waagrechten Ebene einen rund ansteigenden Verlauf, insbesondere den rund ansteigenden Konturabschnitt, auf, wobei sich der Erstreckungswinkel α von der waagrechten Ebene aus aufspannt. Die waagrechte Ebene verläuft vorzugsweise parallel zum Dachholm. Durch diese Ausführungsform ist die Variantenvielfalt zur Ausgestaltung der Haltekonturen weiter erhöht. Besonders von Vorteil ist, wenn der Erstreckungswinkel α 90° beträgt, da die Haltekonturen senkrecht enden, insbesondere auslaufen, und ein besonders sicherer Halt der Runge in Längsrichtung des Dachholms erfolgt.

Vorzugsweise umfassen die Arretiermittel wenigstens zwei Blockierelemente und wenigstens ein Eingriffselement, das in der Verriegelungsstellung formschlüssig zwischen die zwei Blockierelemente eingreift. Auf diese Weise ist der Rungenkopf entlang des Dachholms sowohl in Fahrtrichtung als auch entgegen der Fahrtrichtung formschlüssig gesichert. Die Runge kann so Ladungssicherungskräfte gut in den Dachholm und damit in den Nutzfahrzeugaufbau einleiten.

Weiter vorzugsweise begrenzen die Blockierelemente einen dazwischenliegenden Eingriffsraum, wobei die Haltekonturen, insbesondere die Seitenwände, innen an den Blockierelementen dem Eingriffsraum zugewandt ausgebildet sind. Mit anderen Worten sind die Haltekonturen vorzugsweise an den Blockierelementen derart ausgebildet, dass sie in Längsrichtung des Dachholms einander zugewandt sind. Dadurch ist eine Aufnahme zum Eingreifen des Eingriffselements gebildet. Der Eingriffsraum ist bevorzugt durch die einander zugwandten Haltekonturen wannenförmig ausgebildet. Dies ermöglicht einen besonders sicheren Halt der Runge.

Besonders bevorzugt sind die Haltekonturen an dem Eingriffselement zur Bildung von abgerundeten Außenkanten des Eingriffselements ausgebildet. Mit anderen Worten ist vorzugsweise das Eingriffselement komplementär zu dem wannenförmigen Eingriffsraum ausgebildet. Das Eingriffselement ist somit stabil ausgebildet. Die sichere Einleitung von Kräften in den Dachholm wird dadurch bereitgestellt.

Die Blockierelemente erstrecken sich vorzugsweise senkrecht, wobei in der Verrieglungsstellung das Eingriffselement in senkrechter Richtung in den wannenförmigen Eingriffsraum eingreift. Dadurch ist eine schnelle und einfache Überführung der Runge von der entriegelten Stellung in die Verriegelungsstellung und umgekehrt möglich.

Die Blockierelemente können am Dachholm und das Eingriffselement am Rungenkopf angeordnet sein. Alternativ können die Blockierelemente am Rungenkopf und das Eingriffselement am Dachholm angeordnet sein. Beide Varianten sind möglich. Zweckmäßig ist es jedenfalls, wenn eine formschlüssige Verbindung in der Verriegelungsstellung sowohl in Fahrtrichtung als auch entgegen der Fahrtrichtung erreicht ist.

Bevorzugt sind die Blockierelemente einstückig über einen Verbindungsabschnitt zu einem Blockiermittel verbunden, das am Dachholm oder dem Rungenkopf befestigt ist. Die Blockierelemente können voneinander unabhängig am Dachholm oder am Rungenkopf befestigt sein. Generell hat die Verwendung von Blockierelementen und Eingriffselementen den Vorteil, dass diese auch bei bestehenden Rungen einfach nachrüstbar sind. Die Blockierelemente bzw. das Eingriffselement müssen lediglich am Dachholm und/oder Rungenkopf entsprechend fixiert werden, beispielsweise durch Vernieten oder Anschweißen. Bei der einstückigen Variante, bei welcher die Blockierelemente über den Verbindungsabschnitt verbunden sind, ist diese Nachrüstung nochmals vereinfacht, da weniger Bauteile eingesetzt werden müssen.

Die Erfindung wird nachstehend mit weiteren Einzelheiten unter Bezug auf die beigefügten Zeichnungen näher erläutert. Die dargestellte Ausführungsform stellt ein Beispiel dar, wie der erfindungsgemäße Nutzfahrzeugaufbau ausgestaltet sein kann.

In diesen zeigen,
- Fig. 1: eine Seitenansicht eines Nutzfahrzeugaufbaus nach einem bevorzugten erfindungsgemäßen Ausführungsbeispiel;
- Fig. 2: eine perspektivische Ansicht eines Arretiermechanismus des Nutzfahrzeugaufbaus nach Fig. 1, wobei sich die Runge in einer entriegelten Stellung befindet; und
- Fig. 3: eine perspektivische Ansicht des Arretiermechanismus des Nutzfahrzeugaufbaus nach Fig. 2, wobei sich die Runge in einer Verriegelungsstellung befindet.

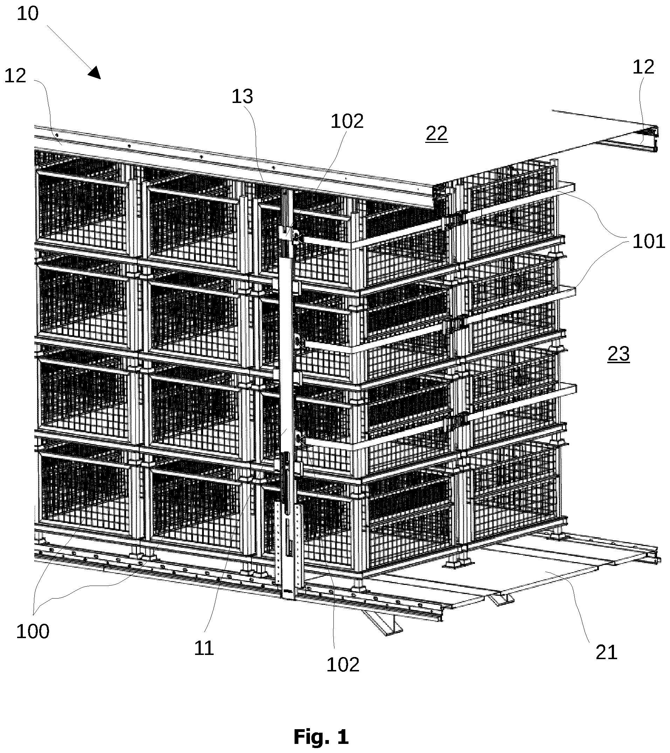

Fig. 1 zeigt einen Nutzfahrzeugaufbau 10 nach einem bevorzugten erfindungsgemäßen Ausführungsbeispiel. Der Nutzfahrzeugaufbau 10 weist einen Ladeboden 21, zwei an dem Ladeboden 21 gegenüber angeordnete Seitenwände (nicht dargestellt), insbesondere Seitenplanen, und ein Dach 22 auf. Stirnseitig ist an dem Ladeboden 21 eine Vorderwand (nicht dargestellt) vorgesehen. Heckseitig sind nicht dargestellte Türen angeordnet, durch die eine heckseitige Ladeöffnung zugänglich ist. In Summe begrenzen der Ladeboden 21, die Seitenwände, das Dach, die Vorderwand und die Türen einen Laderaum 23 des Nutzfahrzeugaufbaus 10.

In Fig. 1 ist zu sehen, dass der Nutzfahrzeugaufbau 10 zwei in dessen Längsrichtung verlaufende Dachholme 12 aufweist, wobei jeweils einer der Dachholme 12 auf jeweils einer der Nutzfahrzeugaufbauseiten angeordnet ist. So sind die Dachholme 12 an dem Laderaum 23 einander gegenüber angeordnet. Der Nutzfahrzeugaufbau 10 weist ferner mehrere seitliche Rungen 11, insbesondere Mittelrungen, auf, die sich zwischen den Dachholmen 12 und dem Ladeboden 21 erstrecken. Die Rungen 11 sind am jeweiligen Dachholm 12 verschiebbar gelagert. Die jeweilige Runge 11 ist außerdem kraft- und/oder formschlüssig mit dem Ladeboden 21 verbindbar. Auf die Verbindung der Runge 11 mit dem Dachholm 12 wird später näher eingegangen.

Fig. 1 zeigt ferner eine Teilladungssicherung entgegen der Fahrtrichtung des Nutzfahrzeugaufbaus 10. Die Ladung 100 liegt dabei an der Vorderwand 20 formschlüssig an. Um die Ladung 100 nach hinten formschlüssig zu sichern, sind insgesamt drei Zurrgurte 101 vorgesehen, die jeweils zwischen den zwei an gegenüberliegenden Seitenwänden des Nutzfahrzeugaufbaus 10 angeordneten Zurreinrichtungen 102 eingehakt sind. Bei dem Ausführungsbeispiel gemäß den Fig. 1 umfasst die Ladung 100 mehrere Gitterboxen, die übereinandergestapelt sind. Insgesamt sind vier Reihen von Gitterboxen übereinander im Nutzfahrzeugaufbau 10 angeordnet. Um eine wirksame Ladungssicherung entgegen der Fahrtrichtung zu erreichen, ist für jede der oberen drei Reihen von Gitterboxen jeweils ein Zurrgurt 101 vorgesehen. Der Zurrgurt 101 erstreckt sich dabei von einer Zurreinrichtung 102 auf der linken Nutzfahrzeugaufbauseite zu einer Zurreinrichtung 102 auf der rechten Nutzfahrzeugaufbauseite. Die Zurreinrichtungen 102 sind dabei jeweils in entsprechender, vorzugsweise gleicher, Höhe an den seitlichen Rungen 11 eingehakt.

Um zu gewährleisten, dass die durch die Zurrmittel aufgenommenen Ladungssicherungskräfte über die Rungen 11 wirksam in den Nutzfahrzeugaufbau 10 eingeleitet werden und somit auch eine Ladungssicherung effektiv erfolgt, sind die Rungen 11 mit jeweils einem Arretiermechanismus 200 ausgestattet, der eine Verriegelung der Rungen 11 auch gegenüber dem Dachholm 12 ermöglicht. Die Runge 11 ist somit durch den Arretiermechanismus 200 an dem Dachholm 12 verriegelbar. Dazu ist die Runge 11 von einer Verriegelungsstellung in eine Entriegelungsstellung, insbesondere entriegelte Stellung, und umgekehrt, überführbar.

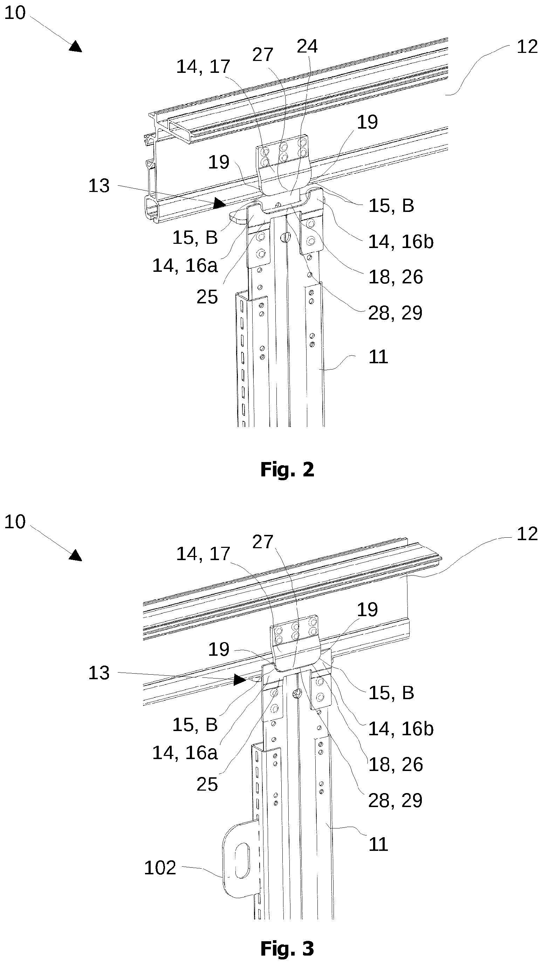

Gemäß Fig. 2 und 3 ist ein solcher Arretiermechanismus 200 gezeigt, wobei sich in Fig. 2 die Runge 11 in der Entriegelungsstellung und in Fig. 3 in der Verriegelungsstellung befindet. In der Entriegelungsstellung ist die Runge 11 entlang des Dachholms 12 verschiebbar. Dazu ist an der Runge 11, konkret an deren Rungenkopf 13 ein Schlitten 24 vorgesehen, der in einem Schienenkanal 25 des Dachholms 12 geführt ist. Der Schlitten 24 zum Verschieben der Runge 11 und der Arretiermechanismus 200 zum Verriegeln der Runge 11 am Dachholm 12 sind an dem Rungenkopf 13 baulich getrennt. In der Verriegelungsstellung ist die Runge 11 an dem Dachholm 12 arretiert, d.h. die Runge 11 an dem Dachholm 12 an einer bestimmten Längsposition festgelegt. Mit anderen Worten ist die Runge 11 in der Verriegelungsstellung entlang des Dachholms 12 nicht verschiebbar.

Der Nutzfahrzeugaufbau 10 bzw. der konkret in den Fig. 2 und 3 gezeigte Arretiermechanismus 200 umfasst Arretiermittel 14, die sowohl am Dachholm 12, als auch an der Runge 11 vorgesehen sind. Wie in Fig. 2 und 3 gezeigt, weist die Runge 11 einen Rungenkopf 13 auf, an dem eines der Arretiermittel 14 angeordnet ist. Die Arretiermittel 13 greifen in einer Verriegelungsstellung der Runge 11 formschlüssig ineinander und verhindern so ein Verschieben der Runge 11 entlang des Dachholms 12. In einer entriegelten Stellung stehen die Arretiermittel 13 nicht im Eingriff miteinander, so dass die Runge 11 entlang des Dachholms 12 verschoben werden kann.

Die Arretiermittel 13 umfassen zwei Blockierelemente 16a, 16b und ein Eingriffselement 17. Um die Verriegelungsstellung einzunehmen, greift das Eingriffselement 17 formschlüssig zwischen die zwei Blockierelemente 16a, 16b ein. Gemäß Fig. 2 und 3 ist beispielsweise vorgesehen, dass das Eingriffselement 17 an einer dem Laderaum 23 zugewandten Innenseite des Dachholms 12 angeordnet ist. Konkret ist das Eingriffselement 17 an einer Innenseite des Dachholms 12 durch Nieten befestigt. Das Eingriffselement 17 umfasst im Wesentlichen ein Blechteil.

Wie in Fig. 2 und 3 gut zu erkennen ist, weist das Eingriffselement 17 zwei rund ausgebildete Haltekonturen 15 auf. Die beiden rund ausgebildeten Haltekonturen 15 sind an einem dem Rungenkopf 13 zugewandten Ende 27 des Eingriffselements 17 gebildet. Konkret sind die Haltekonturen 15 durch abgerundete Außenkanten 19, insbesondere Seitenkanten, gebildet, die an dem Ende 27 in entgegengesetzten Längsrichtungen des Dachholms 12 angeordnet sind. Mit anderen Worten ist an dem Ende 27 des Eingriffselements 17 eine erste Außenkante 19 in einer ersten Längsrichtung des Dachholms 12, insbesondere in Fahrtrichtung, und eine zweite Außenkante 19 in einer entgegengesetzten zweiten Längsrichtung des Dachholms 12, insbesondere entgegen der Fahrtrichtung, angeordnet. Somit befinden sich die rund ausgebildeten Haltekonturen 15 in Längsrichtung des Dachholms 12 an dem Ende 27 des Eingriffselements 17 einander gegenüber.

Wie in Fig. 2 und 3 gezeigt, ist an dem Rungenkopf 13 der Runge 11 ein komplementär ausgebildetes Arretiermittel 13 vorgesehen, das zwei Blockierelemente 16a, 16b aufweist, welche einstückig miteinander verbunden sind und so ein einheitliches Blockiermittel 25 bilden. Das Blockiermittel 25 ist im Wesentlichen als Blechteil ausgebildet.

Konkret sind die Blockierelemente 16a, 16b in Längsrichtung des Dachholms 12 miteinander verbunden. Die Blockierelemente 16a, 16b sind Eine Verbindung der Blockierelemente in einer von der Längsrichtung des Dachholms 12 abweichenden Richtung ist möglich. Die Blockierelemente 16a, 16b sind voneinander beabstandet und einander gegenüber angeordnet. Konkreter sind die Blockierelemente 16a, 16b in Längsrichtung des Dachholms 12 an dem Blockiermittel 25 einander gegenüber angeordnet.

Das Blockiermittel 25 umfasst einen Eingriffsraum 18 für das Eingriffselement 17, der die beiden Blockierelemente 16a, 16b voneinander trennt. Mit anderen Worten begrenzen die voneinander beabstandeten Blockierelemente 16a, 16b einen dazwischenliegenden Eingriffsraum 18. Die Blockierelemente 16a, 16b erstrecken sich senkrecht, wobei in der Verrieglungsstellung das Eingriffselement 17 in senkrechter Richtung in den Eingriffsraum 18 eingreift.

Die beiden Blockierelemente 16a, 16b umfassen ferner zwei rund ausgebildete Haltekonturen 15, die zu den rund ausgebildeten Haltekonturen 15 des Eingriffselements 17 komplementär sind. In Fig. 2 und 3 ist gut zu erkennen, dass die beiden rund ausgebildeten Haltekonturen 15 an den Blockierelementen 16a, 16b innen und zwar dem Eingriffsraum 18 zugewandt ausgebildet sind.

Durch die einander zugewandten Haltekonturen 15 der Blockierelemente 16a, 16b ist der Eingriffsraum 18 wannenförmig, insbesondere badewannenförmig, ausgebildet. Mit anderen Worten weist das Blockiermittel 25 eine wannenförmige Ausnehmung 26 auf, die die beiden Blockierelemente 16a, 16b voneinander trennt. Zwischen den Haltekonturen 15 der Blockierelemente 15 ist ein geradliniger Verbindungsabschnitt 28 gebildet. Durch die beiden Haltekonturen 15 der Blockierelemente 17 ist der wannenförmige Eingriffsraum 18 seitlich, insbesondere in Längsrichtung des Dachholms 12, begrenzt. Der geradlinige Verbindungsabschnitt 28 begrenzt den wannenförmigen Eingriffsraum 18 in Einbaulage nach unten, d.h. bodenseitig.

Der wannenförmige Eingriffsraum 18 ist komplementär zum Ende 27 des Eingriffselements 17 ausgebildet, woraus das Eingriffselement 17 zum Verriegeln der Runge 11 in den wannenförmigen Eingriffsraum 18 eingreifen kann. In der Verriegelungsstellung der Runge 11 bilden das Blockiermittel 25 und das Eingriffselement 17 durch deren rund ausgebildete Haltekonturen 15 einen Formschluss in Längsrichtung des Dachholms 12. Die Haltekonturen 15 der Blockierelemente 16a, 16b, die den wannenförmigen Eingriffsraum 18 begrenzen, blockieren eine Verschiebung der Runge 11 entlang des Dachholms 12.

In der Verriegelungsstellung liegen die rund ausgebildeten Haltekonturen 15 des Eingriffselements 17 und des Blockiermittels 25, insbesondere der Blockierelemente 16a, 16b, vollständig aneinander an. Die Haltekonturen 15 weisen entlang ihres runden Verlaufs eine Haltefläche, die in der Verriegelungsstellung einander liegen. Mit anderen Worten stehen das Eingriffselement 17 und das Blockiermittel 25 durch die rund ausgebildeten Haltekonturen 15 flächig in Kontakt.

Die rund ausgebildeten Haltekonturen 15 des Eingriffselements 17 und der Blockiermittels 25 können jeweils einen Radius R von 1 cm bis 10 cm, insbesondere 2 cm bis 8 cm, vorzugsweise 3 cm bis 6 cm, aufweisen. Andere Radien R sind möglich. Es ist möglich, dass die rund ausgebildeten Haltekonturen 15 nur einen Radius umfassen. Alternativ können die Haltekonturen 15 wenigstens zwei, insbesondere mehr als zwei, runde Konturabschnitte umfassen, deren Radien sich unterscheiden.

Die rund ausgebildeten Haltekonturen 15 des Eingriffselements 17 und der Blockiermittels 25 sind, wie in Fig. 2 und 3 erkennbar, jeweils als Kreisbogen B mit einem Erstreckungswinkel α 90° ausgebildet. Die Haltekonturen 15 weisen ausgehend von einer waagrechten Ebene 29, insbesondere dem Verbindungsabschnitt 28, einen rund ansteigenden Verlauf auf, wobei sich der Erstreckungswinkel α von der waagrechten Ebene 29 aus aufspannt. Ebenfalls in de Fig. 2 und 3 erkennbar ist, dass die Haltekonturen 15, insbesondere des Blockiermittels 25, senkrecht enden und somit ein besonders sicherer Halt der Runge 11 in Längsrichtung des Dachholms 12 erfolgt.

Alternativ können die Haltekonturen 15 jeweils als Kreisbogen B mit einem Erstreckungswinkel α ausgebildet sein, der zwischen 45° und 90°, bspw. 60°, beträgt.

Im Folgenden wird eine Möglichkeit zur Überführung der Runge 11 von einer entriegelten Stellung in die Verriegelungsstellung erläutert. Das Überführen der Runge 11 von einer entriegelten Stellung in die Verriegelungsstellung erfolgt vorzugsweise dadurch, dass die Runge 11 angehoben wird, wodurch das Eingriffselement 17 zwischen die Blockierelemente 16a, 16b gleitet und dort den Formschluss bewirkt. Die wannenförmige Gestaltung des Eingriffselements 17 sowie des Eingriffsraums 18 des Blockiermittels 25 sorgt dabei für eine feste Arretierung er Runge 11. Das Anheben der Runge 11 kann beispielsweise durch einen entsprechenden Hebelmechanismus im Bereich des Rungenfußes erreicht werden. Vorzugsweise umfasst die Runge 11 einen zweiteiligen Aufbau mit einem Schiebling, so dass die Runge 11 insgesamt in ihrer Länge veränderbar ist. Das Anheben der Runge 11 bedeutet in diesem Fall ein teleskopartiges Verschieben eines Schieblings, so dass die Länge der Runge 11 verändert wird. Zum Entriegeln der Runge 11 wird der Schiebling herabgelassen, so dass der Eingriff zwischen dem Eingriffselement 17 und den Blockierelementen 16a, 16b gelöst wird.

Generell wird darauf hingewiesen, dass je verschiebbarer Runge 11 ein Arretiermechanismus 200, wie vorstehend beschrieben, vorgesehen sein kann.

### Bezuaszeichenliste

- 10: Nutzfahrzeugaufbau
- 11: Runge
- 12: Dachholm
- 13: Rungenkopf
- 14: Arretiermittel
- 15: rund ausgebildete Haltekonturen
- 16a, 16b: Blockierelemente
- 17: Eingriffselement
- 18: Eingriffsraum
- 19: Außenkante
- 21: Ladeboden
- 22: Dach
- 23: Laderaum
- 24: Schlitten
- 25: Blockiermittel
- 26: Ausnehmung
- 27: dem Rungenkopf zugewandtes Ende
- 28: Verbindungsabschnitt
- 29: waagrechte Ebene
- 100: Ladung
- 101: Zurrgurte
- 102: Zurreinrichtungen
- 200: Arretiermechanismus
- B: Kreisbogen
- α: Erstreckungswinkel

## Patentansprüche

1. Nutzfahrzeugaufbau (10) mit wenigstens einer Runge (11) und wenigstens einem Dachholm (12) eines Dachs, wobei die Runge (11) an dem Dachholm (12) verschiebbar geführt ist und von einer Verriegelungsstellung in eine entriegelte Stellung und umgekehrt überführbar ist, wobei am Dachholm (12) und an einem Rungenkopf (13) der Runge (11) Arretiermittel (14) vorgesehen sind, die in einer Verriegelungsstellung der Runge (11) ineinandergreifen, um ein Verschieben der Runge (11) entlang des Dachholms (12) zu unterbinden,
**dadurch gekennzeichnet, dass**
die Arretiermittel (14), insbesondere jeweils wenigstens zwei, rund ausgebildete Haltekonturen (15) aufweisen, wobei die Haltekonturen (15) der Arretiermittel (14) in der Verriegelungsstellung einen Formschluss zumindest in Längsrichtung des Dachholms (12) bilden.

2. Nutzfahrzeugaufbau (10) nach Anspruch 1,
**dadurch gekennzeichnet, dass**
die Haltekonturen (15) der Arretiermittel (14) am Dachholm (12) und am Rungenkopf (13) zur Bildung des Formschlusses zumindest abschnittsweise, insbesondere vollständig, aneinander anliegen.

3. Nutzfahrzeugaufbau (10) nach Anspruch 1 oder 2,
**dadurch gekennzeichnet, dass**
die Haltekonturen (15) der Arretiermittel (14) am Dachholm (12) und/oder am Rungenkopf (13) jeweils einen Radius R von 0,5 cm bis 10 cm, insbesondere 0,5 cm bis 6 cm, vorzugsweise 1 cm bis 4 cm, aufweisen.

4. Nutzfahrzeugaufbau (10) nach einem der vorhergehenden Ansprüche,
**dadurch gekennzeichnet, dass**
die Haltekonturen (15) der Arretiermittel (14) am Dachholm (12) und/oder am Rungenkopf (13) jeweils als Kreisbogen (B) mit einem Erstreckungswinkel α von 0° bis 45°, insbesondere 0° bis 60°, vorzugsweise 0° bis 90°, ausgebildet sind.

5. Nutzfahrzeugaufbau (10) nach einem der vorhergehenden Ansprüche,
**dadurch gekennzeichnet, dass**
die Arretiermittel (14) wenigstens zwei Blockierelemente (16a, 16b) und wenigstens ein Eingriffselement (17) umfassen, das in der Verriegelungsstellung formschlüssig zwischen die zwei Blockierelemente (16a, 16b) eingreift.

6. Nutzfahrzeugaufbau (10) nach Anspruch 5,
**dadurch gekennzeichnet, dass**
die Blockierelemente (16a, 16b) einen dazwischenliegenden Eingriffsraum (18) begrenzen, wobei die Haltekonturen (15) innen an den Blockierelementen (16a, 16b) und dem Eingriffsraum (18) zugewandt ausgebildet sind.

7. Nutzfahrzeugaufbau (10) nach Anspruch 6,
**dadurch gekennzeichnet, dass**
der Eingriffsraum (18) durch die einander zugwandten Haltekonturen (15) wannenförmig ausgebildet ist und/oder das Eingriffselement (17) komplementär zu dem wannenförmigen Eingriffsraum (18) ausgebildet ist.

8. Nutzfahrzeugaufbau (10) nach einem der Ansprüche 5 bis 7,
**dadurch gekennzeichnet, dass**
die Haltekonturen (15) an dem Eingriffselement (17) zur Bildung von abgerundeten Außenkanten (19) des Eingriffselements (17) ausgebildet sind.

9. Nutzfahrzeugaufbau (10) nach einem der Ansprüche 5 bis 8,
**dadurch gekennzeichnet, dass**
sich die Blockierelemente (16a, 16b) senkrecht erstrecken, wobei in der Verrieglungsstellung das Eingriffselement (17) in senkrechter Richtung in den wannenförmigen Eingriffsraum (18) eingreift.

10. Nutzfahrzeugaufbau (10) nach einem der Ansprüche 5 bis 9,
**dadurch gekennzeichnet, dass**
die Blockierelemente (16a, 16b) am Dachholm (12) und das Eingriffselement (17) am Rungenkopf (13) oder die Blockierelemente am Rungenkopf (13) und das Eingriffselement (17) am Dachholm (12) angeordnet sind.

11. Nutzfahrzeugaufbau (10) nach einem der Ansprüche 5 bis 10,
**dadurch gekennzeichnet, dass**
die Blockierelemente (16a, 16b) voneinander unabhängig am Dachholm (12) oder am Rungenkopf (13) befestigt oder einstückig über einen Verbindungsabschnitt (28) zu einem Blockiermittel verbunden sind, das am Dachholm (12) oder dem Rungenkopf (13) befestigt ist.
